# EUROPÄISCHE PATENTSCHRIFT

(11) **EP 2 050 920 B1**
(45) Veröffentlichungstag und Bekanntmachung des Hinweises auf die Patenterteilung: **09.12.2015**
(21) Anmeldenummer: 08166337.9
(22) Anmeldetag: 10.10.2008
(51) Int. Cl.: E21B 7/20, E21B 17/042, E21B 47/00, F16L 55/165

(54) **Verfahren und Vorrichtung zum Einziehen eines aus Kurzrohren zusammengesetzten Rohrstranges in einen Bohrkanal**
Method and device to pull a pipeline comprised of short pipes into a boring channel
Procédé et dispositif destinés à l'introduction d'un faisceau tubulaire constitué de tuyaux courts dans un canal de forage

(30) Priorität: 16.10.2007 DE 102007049606
(43) Veröffentlichungstag der Anmeldung: 22.04.2009
(73) Patentinhaber: TERRA AG fuer Tiefbautechnik, 4805 Brittnau (CH); Karosan GmbH innovative Kanal- und Rohrleitungssanierung, 66557 Illingen (DE)
(72) Erfinder: Jenne, Dietmar, Dipl.-Wi.-Ing., 4805 Brittnau (CH); Zimmer, Werner Hans, 66557 Illingen (DE)
(74) Vertreter: Schaumburg und Partner Patentanwälte mbB

(56) Entgegenhaltungen:
- EP-A1- 0 860 638
- WO-A1-03/004823
- DE-A1- 10 353 442
- DE-B3- 10 302 194

## Beschreibung

Die Erfindung betrifft ein Verfahren zum Einziehen von aus einer Mehrzahl von Kurzrohren zusammengesetzten Rohrsträngen in einen Bohrkanal, wobei der Rohrstrang mit seinem einen axialen Ende an einen Zugkopf angeschlossen und über ein den Rohrstrang durchsetzendes, aus einzelnen Abschnitten zusammengesetztes Zuggestänge zwischen dem Zugkopf und einer an dem anderen axialen Rohrende anliegenden Druckplatte eingespannt wird und wobei sowohl der Rohrstrang als auch das Zuggestänge mit fortschreitendem Einziehen des Rohrstranges durch das Anfügen weiterer Kurzrohre bzw. Gestängeabschnitte verlängert wird.

Bei der grabenlosen Rohr- und Leitungsverlegung werden häufig aus Platzgründen Kurzrohre verlegt. Dabei werden hier unter Kurzrohre alle Neurohre verstanden, die über Steckmuffen miteinander verbunden werden, unabhängig von ihrer tatsächlichen Länge.

Kurzrohre werden immer häufiger beim so genannten Berstlining und beim Kaliberbersten verwendet. Beim Berstlining wird zunächst das Altrohr geborsten, der Bohrkanal von einem Aufweitkopf vergrößert und anschließend in diesen Bohrkanal der Rohrstrang eingezogen, dessen Außendurchmessung etwas kleiner als der Aufweitkopf ist. Beim Kaliberbersten werden ein Kalibrierkopf und das Neurohr in das Altrohr eingezogen, ohne dieses zu beschädigen oder zu zerstören. Die Außendurchmesser des Kalibrierkopfes und des Neurohrs sind etwas kleiner als der Innendurchmesser des Altrohres.

Kurzrohre müssen dort eingesetzt werden, wo das Berstlining oder Kaliberbersten von Schacht-zu-Schacht oder aus einem Schacht oder aus einer kleinen Grube heraus erfolgt. Kurzrohre können auch mit steuerbaren Horizontalbohranlagen verlegt werden, wenn die Zielgrube zu klein für Endlosrohre ist.

Ein Verfahren der eingangs genannten Art ist beispielsweise aus der EP 860 638 A1 bekannt. Dabei sind die einzelnen Gestängeabschnitte des Zuggestänges jeweils an ihrem einen Ende mit einer konischen Gewindebohrung und an ihrem anderen Ende mit einem konischen Gewindezapfen versehen, so dass die Gestängeabschnitte abschnittsweise ineinander geschraubt werden können. Die Fertigung eines derartigen Zuggestänges ist teuer und die jeweiligen Gestängeabschnitte können nur für eine bestimmte Länge der Kurzrohre benutzt werden.

Der Erfindung liegt die Aufgabe zugrunde, ein Verfahren der eingangs genannten Art anzugeben, das rasch und preiswert durchzuführen ist und an die unterschiedlichen Bedingungen an der Baustelle anpassbar ist.

Diese Aufgabe wird erfindungsgemäß dadurch gelöst, dass für die Bildung des Zuggestänges Gestängeabschnitte verwendet werden, die auf ihrer gesamten Länge ein Außengewinde und gleich bleibenden Außendurchmesser haben, und dass die Gestängeabschnitte jeweils durch eine Verbindungshülse verbunden werden, die ein dem Außengewinde entsprechendes Innengewinde hat.

Bei der erfindungsgemäßen Lösung können die Gewindeabschnitte vom laufenden Meter entsprechend der jeweiligen Länge der verwendeten Kurzrohre abgeschnitten werden, was ggf. auch noch auf der Baustelle erfolgen kann und eine bequeme Anpassung der Gestängeabschnitte an die jeweils zu verlegenden Kurzrohre erlaubt. Derartige Stangen mit einem Außengewinde, vorzugsweise einem groben Außengewinde mit großer Steigung, wie es beispielsweise bei Zugankern verwendet wird, können preiswert hergestellt werden.

Um ein Durchhängen des Zuggestänges innerhalb des Rohrstranges mit zunehmender Rohrlänge zu vermeiden, ist es zweckmäßig, wenn die miteinander verbundenen Gestängeabschnitte in regelmäßigen Abständen innerhalb des Rohrstranges zentriert werden.

Von den zuständigen Gremien, die sich mit der Rohrsanierung und dem Verlegen von Rohrleitungen befassen, wird heute eine kontinuierliche Erfassung der beim Einzug des Rohrstranges auf diesen wirkenden Zugkraft vorgeschrieben. Dazu reicht es keinesfalls aus, die Gesamtkraft zu ermitteln und festzuhalten, die während des Berst- oder Kalibriervorganges am Gesamtsystem wirkt. Erfindungsgemäß wird dabei vorgeschlagen, dass die auf den Rohrstrang einwirkenden axialen Zug/Druckkräfte gemessen und aufgezeichnet werden. Dies kann z.B. mittels eines Druckaufnehmers erfolgen, der mit dem die Druckplatte frei durchsetzenden Gestängeabschnitt verbunden wird und gegen die Außenseite der Druckplatte gespannt wird. Zum einen kann mit diesem Druckaufnehmer die Kraft gemessen werden, mit der die Kurzrohre, die zwischen dem Zugkopf und der Druckplatte eingespannt sind, in ihren Steckmuffenverbindungen ineinander gepresst werden. Zum anderen lässt sich über diese Messung die Mantelreibung zwischen der Außenumfangsfläche des Rohrstranges und der Wand des Bohrkanales ermitteln. Diese Mantelreibung darf einen gewissen Wert nicht überschreiten, um eine Beschädigung des Rohrstranges zu verhindern bzw. zu vermeiden, dass die Kurzrohre an ihrer Steckmuffenverbindung auseinander gezogen werden. Um die Reibung zu vermindern, kann zwischen die Mantelfläche des Rohrstranges und die Wand des Bohrkanals ein Gleitmittel eingebracht werden. Vorzugsweise geschieht dies über das hohl ausgebildete Zuggestänge.

Die Erfindung betrifft ferner eine Vorrichtung zum Einziehen eines aus Kurzrohren zusammengesetzten Rohrstranges in einen Bohrkanal, umfassend einen Zugkopf, der einerseits mit einer Zugvorrichtung verbindbar ist und an den anderseits der Rohrstrang anschließbar ist, sowie ein Zuggestänge, das aus einzelnen Gestängeabschnitten zusammengesetzt ist und das an seinem einen Ende mit dem Zugkopf und an seinem anderen Ende mit einer Druckplatte verbindbar ist, die zur Anlage an dem jeweiligen zugkopffernen Ende des Rohrstranges bestimmt ist. Erfindungsgemäß haben die Gestängeabschnitte bei dieser Vorrichtung ein jeweils auf ihrer gesamten Länge durchgehendes Außengewinde, so dass die Gestängeabschnitte jeweils durch mit einem entsprechenden Innengewinde versehene Verbindungshülsen verbindbar sind. Vorzugsweise ist das Zuggestänge innerhalb des Rohrstranges mit Zentriermittel verbindbar, um das Zuggestänge in einer axialen Position bezüglich des Rohrstranges zu halten. Diese Zentriermittel können einen auf den jeweiligen Gewindeabschnitt aufschraubbaren Zentrierkörper umfassen. Beispielsweise kann eine Verbindungshülse durch einen solchen hülsenförmigen Zentrierkörper ersetzt werden, der eine Mehrzahl von radial von dieser Zentrierhülse abstehende Zentrierstreben umfasst. Die Länge der Zentrierstreben kann einstellbar sein, um die Zentriervorrichtung an unterschiedliche Rohrdurchmesser anpassen zu können.

Der Zentrierkörper kann aber auch von einer Ringscheibe gebildet sein, deren Innendurchmesser etwas größer als der Durchmesser des Zuggestänges und deren Außendurchmesser geringfügig kleiner als der Innendurchmesser des Rohrstranges ist, so dass die Scheibe einfach über das Gestänge geschoben und zusammen mit diesem in ein Kurzrohr eingesetzt wird. Eine solche Ringscheibe ist natürlich nur für einen bestimmten Rohrdurchmesser geeignet.

Um ein rasches Auswechseln der Druckplatte beim Ansetzen eines neuen Kurzrohres zu ermöglichen, hat die Druckplatte vorzugsweise einen radialen Schlitz, so dass sie seitlich auf den jeweiligen Gestängeabschnitt aufsetzbar ist bzw. von diesem abgezogen werden kann.

Um ein Gleitmittel zwischen den Außenumfang des Rohrstranges und die Wand des Bohrkanals einführen zu können, hat der Zugkopf bei einer bevorzugten Lösung der Erfindung mindestens einen mit einer Gleitmittelleitung verbindbaren Gleitmittelkanal, der an der Außenumfangsfläche des Zugkopfes mündet. Um das Gleitmittel zuzuführen, können die Gestängeabschnitte und die Verbindungshülsen hohl sein, so dass die miteinander verbundenen Gestängeabschnitte eine mit dem Gleitmittelkanal verbindbare Gleitmittelleitung bilden. Die Gleitmittelleitung kann aber auch von der Zielgrube her an den Zugkopf herangeführt werden.

Der Zugkopf hat zweckmäßigerweise einen konischen Kopfteil der zum Aufweiten oder zum Kaliberbersten dient, und einen am durchmessergroßen Ende desselben ansetzenden Schaftteil, der zum Anschluss des Rohrstranges bestimmt ist. Dabei kann der Schaftteil einen gegenüber dem Rohrdurchmesser geringeren Außendurchmesser haben, so dass der Schaftteil in das Rohrende eingeschoben wird. Ebenso kann aber auch der Schaftteil ein Rohrstutzen mit einem gegenüber dem Außendurchmesser des Rohrstranges größeren Innendurchmesser sein, so dass der Rohrstrang mit seinem Ende in den Schaftteil eingeschoben wird. In diesem Falle ist es zweckmäßig, wenn an der Außenseite des Zugkopfes eine Markierung angebracht ist, die der Lage des vorderen Endes des in den Schaftteil eingeschobenen Rohrstranges entspricht. Auf diese Weise kann der Rohrstrang genau bis zu der gewünschten Position in der Zielgrube eingezogen werden, ohne dass der Zugkopf demontiert werden muss, um die Position feststellen zu können.

Um die auf den Rohrstrang hauptsächlich aufgrund der Mantelreibung zwischen diesem und der Bohrkanalwand auftretenden Kräfte messen zu können, wird erfindungsgemäß vorgeschlagen, dass der jeweils letzte Gestängeabschnitt die Druckplatte frei durchsetzt und mit einem Sicherungselement verbunden ist und dass zwischen dem Sicherungselement und der Druckplatte eine Kraftmesseinrichtung angeordnet ist. Diese kann beispielsweise von einer ringförmigen Lastdose gebildet sein, die auf den die Druckplatte durchsetzenden Gestängeabschnitt aufgesteckt und zwischen der Druckplatte und dem Sicherungselement eingespannt ist. Das Sicherungselement ist zweckmäßigerweise eine auf den Gestängeabschnitt aufschraubbare Mutter, die mit Hilfe einer entsprechenden Vorrichtung mit einem genau vorgebbaren Drehmoment angezogen werden kann, um die Kurzrohre mit einer vorgegebenen Kraft ineinander zu pressen.

Die folgende Beschreibung erläutert in Verbindung mit den beigefügten Zeichnungen die Erfindung anhand eines Ausführungsbeispieles. Es zeigen:
- Fig. 1: einen Axialschnitt durch ein einzuziehendes Rohr mit der hierzu dienenden Vorrichtung gemäß einer ersten Ausführungsform der Erfindung,

- Fig. 2: eine der Figur 1 entsprechende Ansicht gemäß einer zweiten Ausführungsform der Erfindung,
- Fig. 3: eine vergrößerte Schnittdarstellung des Zugkopfes mit dem vorderen Ende des einziehenden Rohrstranges und
- Fig. 4: eine perspektivische Darstellung einer speziellen Ausführungsform der Druckplatte.

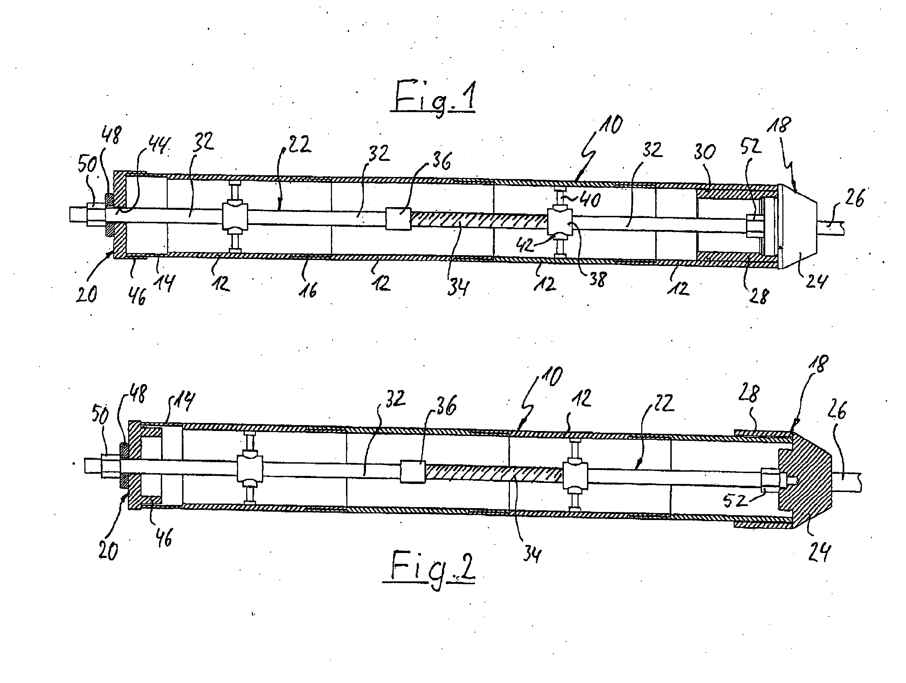

Figur 1 zeigt in einem die Achse enthaltenden Schnitt einen allgemein mit 10 bezeichneten Rohrstrang, der aus einzelnen Kurzrohren 12 besteht, die über Steckmuffen miteinander verbunden sind und hierzu jeweils an ihrem einen Ende eine Muffe 14 mit gegenüber dem übrigen Rohrdurchmesser größeren Innendurchmesser und an ihrem anderen Ende ein Steckteil 16 mit gegenüber dem übrigen Rohrdurchmesser kleineren Außendurchmesser haben. Der aus den einzelnen ineinander gesteckten Kurzrohren 12 bestehende Rohrstrang 10 hat einen gleich bleibenden Außendurchmesser.

Der Rohrstrang 10 ist zwischen einem allgemein mit 18 bezeichneten Zugkopf und einer Druckplatte 20 eingespannt, wobei der Zugkopf 18 und die Druckplatte 20 durch ein Zuggestänge 22 miteinander verbunden sind.

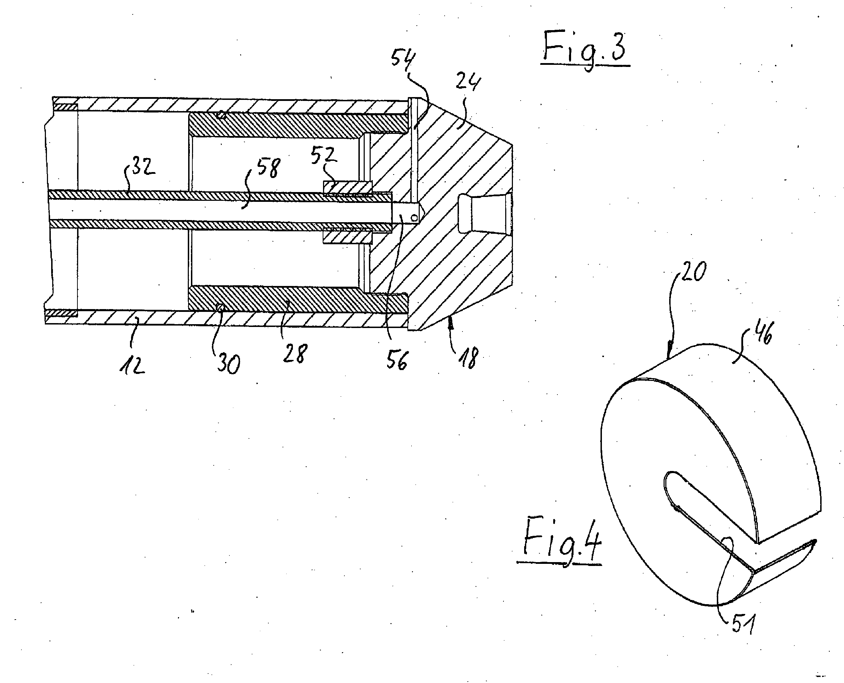

Der Zugkopf 18 hat einen kegelstumpfförmigen Kopfteil 24, das an seinem durchmesserkleineren Ende beispielsweise über ein Seil, ein Gestänge, eine Kette 26 oder dergleichen mit einer nicht dargestellten Zugmaschine verbunden werden kann. An seinem rückwärtigen durchmessergrößeren Ende ist der Kopfteil 24 mit einem Schaftteil 28 verbunden, dessen Außendurchmesser bei dem in der Figur 1 dargestellten Ausführungsbeispiel so gewählt ist, dass der Schaftteil in den Rohrstrang 10 bzw. das erste Kurzrohr 12 eingesteckt werden kann. Bei der Ausführungsform gemäß Figur 2 ist der Schaftteil von einem Rohrstutzen gebildet, dessen Durchmesser so gewählt ist, dass das dem Zugkopf 18 benachbarte Ende des Rohrstranges 10 in den Schaftteil eingesteckt wird. Zur besseren Abdichtung des Innenraumes des Rohrstranges 10 trägt der Schaftteil 28 auf seinem Außenumfang einen Dichtring 30 (Fig. 1 und 3).

Das Zuggestänge besteht aus Gestängeabschnitten 32, die als Rohre ausgebildet sind und auf ihrem Außenumfang ein durchgehendes Gewinde 34 haben, das in den Figuren 1 nur schematisch angedeutet ist. Die einzelnen Gestängeabschnitte werden durch rohrförmige Verbindungshülsen 36 miteinander verschraubt, die ein dem Außengewinde 34 entsprechendes Innengewinde haben. An die Stelle der Verbindungshülsen können Zentrierhülsen 38 treten, die auf ihrem Außenumfang radial abstehende Zentrierstreben 40 tragen. Die Streben 40, von denen vorzugsweise drei in gleichen Winkelabstand voneinander vorgesehen sind, können beispielsweise im Gewindestutzen 42 eingeschraubt sein, so dass ihre radiale Länge in gewissem Umfange einstellbar ist.

Die Druckplatte 20 hat eine zentrale Bohrung 44, durch die das Zuggestänge 22 frei hindurchtreten kann, wie dies die Figuren 1 und 2 zeigen. Ferner schließt sich an die Druckplatte 20 ein Rohrstutzen 46 an, in den bei dem Ausführungsbeispiel gemäß Figur 1 das der Druckplatte 20 zugewandte Ende des Rohrstrangs 10 eingesteckt ist, während bei der Ausführungsform gemäß Figur 2 der Durchmesser dieses Stutzens 46 so gewählt ist, dass der Stutzen in das Rohrende eingreift.

Auf das durch die Druckplatte 20 hindurch tretende Ende des letzten Gestängeabschnittes 32, ist eine ringförmige Kraftmessdose 48 aufgesteckt, die mittels einer Spannmutter 50 gegen die Druckplatte 20 gespannt ist bzw. die Druckplatte 20 gegen das Ende des Rohrstrangs 10 presst. Mit Hilfe eines geeigneten Werkzeuges oder auch manuell kann die Spannmutter 50 so angezogen werden, dass die Kurzrohre 12 mit einer vorgegebenen und durch die Messdose 48 ermittelbaren Kraft ineinander geschoben werden.

Bei der Ausführungsform gemäß Fig. 4 hat die Druckplatte 20 einen radialen Schlitz 51, so dass sie von der Seite her auf den Gestängeabschnitt 32 aufschiebbar ist.

Mit der soweit beschriebenen Vorrichtung läuft das Verfahren beim Einziehen eines Rohrstranges in einen Bohrkanal folgendermaßen ab:

Der erste Gestängeabschnitt 32 wird so abgelängt, dass er nach dem Einschrauben in einen am Kopfteil 24 des Zugkopfes 18 angeordneten Gewindestutzen 52 ein wenig (ca. 100 mm) hinter dem ersten Kurzrohr 12 herausragt, das auf den Schaftteil 28 des Zugkopfes 18 aufgesteckt ist. Die Druckplatte wird auf den herausragenden Teil des Gestängeabschnittes 32 aufgesteckt. Anschließend wird die Kraftmessdose 48 von hinten auf das Gestänge geschoben. Dann wird die Spannmutter 50 auf den Gestängeabschnitt geschraubt und mit einem Werkzeug so stark vorgespannt, dass die Kraftmessdose diejenige Kraft anzeigt, mit der die Kurzrohre während des Rohreinzugs vorgespannt sein sollen (beispielsweise 30kN). Die Spannmutter kann auch mit einem leicht angetriebenen Werkzeug angezogen werden, um den Rohrwechsel so leicht und schnell wie möglich auszuführen. Die Kraftanzeige wird dann auf Null justiert und das erste Kurzrohr in den Bohrkanal oder das Altrohr eingezogen. Während des Rohreinzugs zeigt die Kraftmessdose diejenige Kraft an, mit der das Kurzrohr eingezogen wird. Bei dieser Zugkraft handelt es sich im wesentlichen um die Reibungskräfte zwischen den Kurzrohren und der Bohrkanalwand bzw. der Wand des Altrohres. Diese Zugkraft darf vorgegebene Werte nicht überschreiten. Die Zugkraft wird aufgezeichnet oder in einem Computer angezeigt und abgespeichert.

Nachdem das erste Kurzrohr eingezogen ist, wird die Spannmutter 50 abgeschraubt, die Kraftmessdose nach hinten abgezogen und die Druckplatte 20 weggezogen. Eine Verbindungshülse 36 wird auf den ersten Gestängeabschnitt aufgeschraubt. Der nächste Gestängeabschnitt wird entsprechend der Länge des Kurzrohrs abgelenkt, in das zuvor angesetzte nächste Kurzrohr gesteckt und in die Verbindungshülse 36 geschraubt. Dadurch, dass das Zuggestänge 22 ein durchgehendes Außengewinde 34 besitzt, lässt es sich immer mit entsprechenden Verbindungshülse 36 verschrauben, egal auf welcher Länge es abgelenkt wurde. Zweckmäßigerweise werden grobe Außengewinde mit großer Steigung verwendet, wie sie beispielsweise bei Zugankern üblich sind. Die Druckplatte 20, die Kraftmessdose 48 und die Spannmutter 50 werden wieder montiert, wie dies oben beschrieben wurde. Durch Anziehen der Spannmutter wird das neue Kurzrohr 12 in den bisherigen Rohrstrang gezogen. Dadurch rastet die Steckmuffenverbindung zwischen den Kurzrohren 12 vorschriftsmäßig ein. Die Kurzrohre 12 werden wieder mit der vorgeschriebenen Kraft vorgespannt. Die während des Rohreinzuges auf den Rohrstrang tatsächlich wirkende Kraft wird wieder gemessen und aufgezeichnet, wie dies oben beschrieben wurde.

Um die Mantelreibung zu vermindern, ist es zweckmäßig, zwischen den Außenumfang des Rohrstranges 10 und die Bohrkanalwand ein Gleitmittel oder Schmiermittel wie Bentonit einzuführen. Durch die Verminderung der Reibung werden die erforderlichen Zugkräfte verringert. Um das Schmiermittel zuzuführen, hat der Zugkopf 18 eine Mehrzahl von radialen Schmiermittelkanälen 54 (Fig. 3), die an dem Außenumfang des Kopfteiles 24 münden und über einen zentralen Kanal 56 mit dem Innenraum 58 des rohrförmigen Zuggestänges 22 in Verbindung stehen. Das Zuggestänge 22 kann so als Schmiermittelleitung verwendet werden, um Schmiermittel in den Ringspalt zwischen den Rohrstrang 10 und der Bohrkanalwand zu pumpen.

## Patentansprüche

1. Verfahren zum Einziehen von aus einer Mehrzahl von Kurzrohren (12) zusammengesetzten Rohrsträngen (10) in einen Bohrkanal, wobei der Rohrstrang (10) mit seinem einen axialen Ende an einen Zugkopf (18) angeschlossen und über ein den Rohrstrang (10) durchsetzendes und aus einzelnen Abschnitten (32) zusammengesetztes Zuggestänge (22) zwischen dem Zugkopf (18) und einer an dem anderen axialen Ende des Rohrstranges (10) anliegenden Druckplatte (20) eingespannt wird und wobei sowohl der Rohrstrang (10) als auch das Zuggestänge (22) mit fortschreitendem Einziehen des Rohrstranges (10) durch das Anfügen weiterer Kurzrohre (12) bzw. Gestängeabschnitte (32) verlängert wird, **dadurch gekennzeichnet, dass** für die Bildung des Zuggestänges (22) Gestängeabschnitte (32) verwendet werden, die auf ihrer gesamten Länge ein Außengewinde (34) und einen gleich bleibenden Außendurchmesser haben, und dass die Gestängeabschnitte (32) jeweils durch eine Verbindungshülse (36) verbunden werden, die ein dem Außengewinde entsprechendes Innengewinde hat.

2. Verfahren nach Anspruch 1, **dadurch gekennzeichnet, dass** die miteinander verbunden Gestängeabschnitte (32) in regelmäßigen Abständen innerhalb des Rohrstranges (10) zentriert werden.

3. Verfahren nach Anspruch 1 oder 2, **dadurch gekennzeichnet, dass** die auf den Rohrstrang (10) einwirkenden axialen Zug/Druckkräfte gemessen und aufgezeichnet werden.

4. Verfahren nach Anspruch 3, **dadurch gekennzeichnet, dass** die Zug/Druckkräfte mittels eines Druckaufnehmers (48) gemessen werden, der mit dem die Druckplatte (20) frei durchsetzenden Gestängeabschnitt (32) verbunden ist und der gegen die Außenseite der Druckplatte (20) gespannt wird.

5. Vorrichtung zum Einziehen eines aus Kurzrohren (12) zusammengesetzten Rohrstranges (10) in einen Bohrkanal, umfassend einen Zugkopf (18), der einerseits mit einer Zugvorrichtung verbindbar ist und an den andererseits der Rohrstrang (10) anschließbar ist, sowie ein Zuggestänge (22), das aus einzelnen Gestängeabschnitten (32) zusammengesetzt ist und das an einem Ende mit dem Zugkopf (18) und an seinem anderen Ende mit einer Druckplatte (20) verbindbar ist, die zur Anlage an dem jeweiligen zugkopffernen Ende des Rohrstranges (10) bestimmt ist, **dadurch gekennzeichnet, dass** die Gestängeabschnitte (32) ein jeweils auf ihrer gesamten Länge durchgehendes Außengewinde (34) haben und dass zur Verbindung der Gestängeabschnitte (32) mit einem entsprechenden Innengewinde versehene Verbindungshülsen (36) vorgesehen sind.

6. Vorrichtung nach Anspruch 5, **dadurch gekennzeichnet, dass** das Zuggestänge (22) innerhalb des Rohrstranges (10) mit Zentriermitteln (38, 40) verbindbar ist.

7. Vorrichtung nach Anspruch 6, **dadurch gekennzeichnet, dass** die Zentriermittel einen auf den jeweiligen Gestängeabschnitt (32) aufsetzbaren Zentrierkörper umfassen und dass der Zentrierkörper von einer Ringscheibe gebildet ist, deren Innendurchmesser etwas größer als der Durchmesser des Zuggestänges und deren Außendurchmesser geringfügig kleiner als der Innendurchmesser des Rohrstranges ist.

8. Vorrichtung nach Anspruch 6, **dadurch gekennzeichnet, dass** die Zentriermittel einen auf den jeweiligen Gestängeabschnitt (32) aufsetzbaren Zentrierkörper umfassen und dass der Zentrierkörper eine Zentrierhülse (38) und eine Mehrzahl radial von dieser abstehender Zentrierstreben (40) umfasst.

9. Vorrichtung nach Anspruch 8, **dadurch gekennzeichnet, dass** die Länge der Zentrierstreben (40) einstellbar ist.

10. Vorrichtung nach einem der Ansprüche 5 bis 9, **dadurch gekennzeichnet, dass** die Druckplatte (20) einen radialen Schlitz hat, so dass sie seitlich auf den jeweiligen Gestängeabschnitt (32) aufsetzbar ist.

11. Vorrichtung nach einem der Ansprüche 5 bis 10, **dadurch gekennzeichnet, dass** der Zugkopf (18) mindestens einen mit einer Gleitmittelleitung (58) verbindbaren Gleitmittelkanal (54, 56) hat, der an der Außenumfangsfläche des Zugkopfes (18) mündet und durch den Gleitmittel zwischen die Mantelfläche des Rohrstranges (10) und die Wand des Bohrkanals einführbar ist.

12. Vorrichtung nach einem der Ansprüche 5 bis 11, **dadurch gekennzeichnet, dass** der Zugkopf (18) einen konischen Kopfteil (24) und einen am durchmessergroßen Ende desselben ansetzenden Schaftteil (28) hat, der zum Anschluss des Rohrstranges (10) bestimmt ist, und dass der Schaftteil (28) ein gegenüber dem Rohrdurchmesser geringeren Außendurchmesser hat.

13. Vorrichtung nach einem der Ansprüche 5 bis 11, **dadurch gekennzeichnet, dass** der Zugkopf (18) einen konischen Kopfteil (24) und einen am durchmessergroßen Ende desselben ansetzenden Schaftteil (28) hat, der zum Anschluss des Rohrstranges (10) bestimmt ist, und dass der Schaftteil (28) ein Rohrstutzen mit einem gegenüber dem Außendurchmesser des Rohrstranges (10) größeren Innendurchmesser ist und dass an der Außenseite des Zugkopfes (18) eine Markierung angebracht ist, die der Lage des vorderen Endes des in dem Schaftteil (28) eingeschobenen Rohrstranges (10) entspricht.

14. Vorrichtung nach einem der Ansprüche 5 bis 13, **dadurch gekennzeichnet, dass** der jeweils letzte Gestängeabschnitt (32) die Druckplatte (20) frei durchsetzt und mit einem Sicherungselement (50) verbunden ist und dass zwischen dem Sicherungselement (50) und der Druckplatte (20) eine Kraftmesseinrichtung (48) angeordnet ist.

15. Vorrichtung nach Anspruch 14, **dadurch gekennzeichnet, dass** die Kraftmesseinrichtung von einer ringförmigen Kraftmessdose gebildet ist, die auf den die Druckplatte (20) durchsetzenden Gestängeabschnitt (32) aufgesteckt und zwischen der Druckplatte (20) und dem Sicherungselement (50) eingespannt ist.

## Claims

1. A method for pulling pipe runs (10) comprised of a plurality of short pipes (12) into a bore channel, wherein the pipe run (10) is connected with its one axial end to a pulling head (18) and is clamped between the pulling head (18) and a pressure plate (20) lying against the other axial end of the pipe run (10) via a pull rod assembly (22) extending through the pipe run (10) and comprising single sections (32), and wherein the length of both the pipe run (10) and the pull rod assembly (22) is increased during the pulling in of the pipe run (10) by adding further short pipes (12) and pull rod sections (32), respectively, thereto, **characterized in that** the pull rod sections (32) used to form the pull rod assembly (22) have an external thread (34) and a constant external diameter over their entire length, and **in that** the pull rod sections (32) are each connected by means of a connecting sleeve (36) having an internal thread corresponding to the external thread.

2. The method according to claim 1, **characterized in that** the pull rod sections (32) connected to each other are being centered in regular intervals within the pipe run (10).

3. The method according to claim 1 or 2, **characterized in that** the axial tensile /compression forces acting on the pipe run (10) are measured and recorded.

4. The method according to claim 3, **characterized in that** the tensile/compression forces are measured by means of a pressure sensor (48) which is connected to the pull rod section (32) freely extending through the pressure plate (20) and which is clamped against the outer sface of the pressure plate (20).

5. A device for pulling a pipe run (10) comprised of short pipes (12) into a bore channel, the device comprising a pulling head (18), which is connectable to a pulling tool on its one side and to which the pipe run (10) is connectable at its other side, as well as a pull rod assembly (22) which is comprised of single pull rod sections (32) and which is connectable at its one end to the pulling head (18) and at its other end to a pressure plate (20) adapted to lie against the respective end of the pipe run (10) remote from the pulling head, **characterized in that** the pull rod sections (32) each have an external thread (34) over their entire length and that connecting sleeves (36) having a corresponding internal thread are provided for connecting the pull rod sections (32).

6. The device according to claim 5, **characterized in that** the pull rod assembly (22) is connectable to centering means (38, 40) within the pipe run (10).

7. The device according to claim 6, **characterized in that** the centering means comprise a centering body attachable onto the respective pull rod section (32) and that the centering body is formed by an annular disc whose interior diameter is slightly larger than the diameter of the pull rod assembly and whose exterior diameter is slightly smaller than the interior diameter of the pipe run.

8. The device according to claim 6, **characterized in that** the centering means comprise a centering body attachable onto the respective pull rod section (32) and that the centering body comprises a centering sleeve (38) and a plurality of centering struts (40) extending radially away from said sleeve.

9. The device according to claim 8, **characterized in that** the length of the centering struts (40) is adjustable.

10. The device according to one of claims 5 to 9, **characterized in that** the pressure plate (20) has a radial slot so that it can be attached laterally onto the respective pull rod section (32).

11. The device according to one of claims 5 to 10, **characterized in that** the pulling head (18) has at least one lubricant channel (54, 56) connectable to a lubricant pipe (58) which lubricant channel opens into the outer peripheral surface of the pulling head (18) and through which the lubricant can be introduced between the outer surface of the pipe run (10) and the wall of the bore channel.

12. The device according to one of claims 5 to 11, **characterized in that** the pulling head (18) has a conical head part (24) and a shaft part (28) attached at the diameter-sized end of the head part, which shaft part is adapted for connection to the pipe run (10) and **in that** the external diameter of the shaft part (28) is slightly smaller than the pipe diameter.

13. The device according to one of claims 5 to 11, **characterized in that** the pulling head (18) has a conical head part (24) and a shaft part (28) attached at the diameter-sized end of the head part which shaft part is adapted for connection to the pipe run (10), and **in that** the shaft part (28) is a pipe socket whose internal diameter is bigger than the external diameter of the pipe run (10) and **in that** a check mark is provided on the outer surface of the pull head (18) which check mark corresponds to the position of the leading end of the pipe run (10) introduced into the shaft part (28).

14. The device according to one of claims 5 to 13, **characterized in that** the respective last pull rod section (32) freely extends through the pressure plate (20) and is connected to a retaining element (50) and **in that** between the retaining element (50) and the pressure plate (20) a force meter (48) is provided.

15. The device according to claim 14, **characterized in that** the force meter is formed by an annular load cell which is attached onto the pull rod section (32) extending through the pressure plate (20) and which is clamped between the pressure plate (20) and the retaining element (50).

## Revendications

1. Procédé permettant d'enfoncer des trains de tiges (10) composés d'une pluralité de tiges courtes (12) dans un canal de forage, le train de tiges (10) étant raccordé par l'une de ses extrémités axiales à une tête de traction (18) et serré par l'intermédiaire d'une tringlerie de traction (22) traversant le train de tiges (10) et composée de différentes parties (32) entre la tête de traction (18) et une plaque de compression (20) reposant sur l'autre extrémité axiale du train de tiges (10), et autant le train de tiges (10) que la tringlerie de traction (22) étant rallongés par l'enfoncement progressif du train de tiges (10) du fait de l'adjonction d'autres tiges courtes (12) ou de parties de tringlerie (32), **caractérisé en ce que** pour la formation de la tringlerie de traction (22), on utilise des parties de tringlerie (32) qui présentent sur toute leur longueur un filet extérieur (34) et un diamètre extérieur constant, et **en ce que** les parties de tringlerie (32) sont reliées respectivement par un manchon de raccordement (36) qui présente un filet intérieur correspondant au filet extérieur.

2. Procédé selon la revendication 1, **caractérisé en ce que** les parties de tringlerie (32) reliées les unes aux autres sont centrées par intervalles réguliers à l'intérieur du train de tiges (10).

3. Procédé selon la revendication 1 ou 2, **caractérisé en ce que** les forces de traction/de compression axiales agissant sur le train de tiges (10) sont mesurées et enregistrées.

4. Procédé selon la revendication 3, **caractérisé en ce que** les forces de traction/de compression sont mesurées au moyen d'un capteur de traction (48) qui est relié à la partie de tringlerie (32) traversant librement la plaque de compression (20) et qui est serré contre la face extérieure de la plaque de compression (20).

5. Dispositif permettant d'enfoncer un train de tiges (10) composé de tiges courtes (12) dans un canal de forage, comprenant une tête de traction (18) qui peut d'une part être reliée à un dispositif de traction et d'autre part être raccordée au train de tiges (10), ainsi qu'une tringlerie de traction (22) qui est composée de différentes parties de tringlerie (32) et peut être reliée par une extrémité à la tête de traction (18) et par son autre extrémité à une plaque de compression (20), qui est conçue pour être en appui contre l'extrémité respective, éloignée de la tête de traction, du train de tiges (10), **caractérisé en ce que** les parties de train de tiges (32) présentent un filet extérieur (34) respectivement continu sur toute sa longueur et **en ce que** des manchons de raccordement (36) pourvus d'un filet intérieur correspondant sont destinés à mettre en oeuvre le raccordement des parties de tringlerie (32).

6. Dispositif selon la revendication 5, **caractérisé en ce que** la tringlerie de traction (22) peut être reliée à des moyens de centrage (38, 40) à l'intérieur du train de tiges (10).

7. Dispositif selon la revendication 6, **caractérisé en ce que** les moyens de centrage comportent un corps de centrage pouvant être posé sur la partie de tringlerie (32) respective et **en ce que** le corps de centrage est formé par un disque annulaire dont le diamètre intérieur est sensiblement plus grand que le diamètre de la tringlerie de traction, et dont le diamètre extérieur est sensiblement inférieur au diamètre intérieur du train de tiges.

8. Dispositif selon la revendication 6, **caractérisé en ce que** les moyens de centrage comprennent un corps de centrage pouvant être posé sur la partie de tringlerie (32) respective et **en ce que** le corps de centrage comporte un manchon de centrage (38) et une pluralité de barres de centrage (40) faisant saillie radialement dudit manchon.

9. Dispositif selon la revendication 8, **caractérisé en ce que** la longueur des barres de centrage (40) est réglable.

10. Dispositif selon l'une quelconque des revendications 5 à 9, **caractérisé en ce que** la plaque de compression (20) présente une fente radiale, de sorte qu'elle peut être posée sur le côté de la partie de tringlerie (32) respective.

11. Dispositif selon l'une quelconque des revendications 5 à 10, **caractérisé en ce que** la tête de traction (18) présente au moins un canal de lubrifiant (54, 56) pouvant être relié à une conduite de lubrifiant (58), ledit canal débouchant sur la surface périphérique extérieure de la tête de traction (18), et un lubrifiant pouvant être introduit à travers ce canal entre la surface du train de tiges (10) et la paroi du canal de forage.

12. Dispositif selon l'une quelconque des revendications 5 à 11, **caractérisé en ce que** la tête de traction (18) présente une partie tête conique (24) et une partie queue (28) fixée à l'extrémité de grand diamètre de ladite partie tête, ladite partie queue étant conçue pour le raccordement du train de tiges (10), et **en ce que** la partie queue (28) présente un diamètre extérieur inférieur au diamètre de la tige.

13. Dispositif selon l'une quelconque des revendications 5 à 11, **caractérisé en ce que** la tête de traction (18) présente une partie tête conique (24) et une partie queue (28) fixée à l'extrémité de grand diamètre de ladite partie tête, ladite partie queue étant conçue pour le raccordement du train de tiges (10), et **en ce que** la partie queue (28) est une tubulure présentant un diamètre intérieur supérieur au diamètre extérieur du train de tiges (10) et **en ce qu'**une marque correspondant à la position de l'extrémité avant du train de tiges (10) introduit dans la partie queue (28) est appliquée sur la face extérieure de la tête de traction (18).

14. Dispositif selon l'une quelconque des revendications 5 à 13, **caractérisé en ce que** la dernière partie de tringlerie (32) traverse librement la plaque de compression (20) et est reliée à un élément de blocage (50) et **en ce qu'**un dispositif de mesure de force (48) est disposé entre l'élément de blocage (50) et la plaque de compression (20).

15. Dispositif selon la revendication 14, **caractérisé en ce que** le dispositif de mesure de force est formé par un capteur dynamométrique annulaire qui est fixé sur la partie de tringlerie (32) traversant la plaque de compression (20) et est serré entre la plaque de compression (20) et l'élément de blocage (50).
